# EUROPÄISCHE PATENTANMELDUNG

(11) **EP 0 716 332 A1**
(43) Veröffentlichungstag der Anmeldung: **12.06.1996**
(21) Anmeldenummer: 95118813.5
(22) Anmeldetag: 30.11.1995
(51) Int. Cl.: G02F 1/01, H04B 10/155, H03H 7/38

(54) **Optischer Modulatorschaltkreis**

(30) Priorität: 08.12.1994 DE 4443630
(71) Anmelder: Alcatel SEL Aktiengesellschaft, D-70435 Stuttgart (DE); ALCATEL N.V., NL-2288 BH Rijswijk (NL)
(72) Erfinder: Mayer, Hans-Peter, Dr., D-70825 Korntal (DE); Baums, Dieter, Dr., D-71636 Ludwigsburg (DE)
(74) Vertreter: Pechhold, Eberhard, Dipl.-Phys.

(57) **Zusammenfassung**

Es wird eine Schaltungsanordnung für einen optischen Modulator mit einer in Sperrichtung betriebenen optischen Modulatordiode (MD) angegeben, die außer einem der Modulatordiode parallelgeschalteten Nebenschlußwiderstand (RN) einen der Modulatordiode vorgeschalteten Dämpfungswiderstand (RD) zur Dämpfung unerwünschter Reflexionen enthält. Vorzugsweise ist der Dämpfungswiderstand der Parallelschaltung von Modulatordiode und Nebenschlußwiderstand vorgeschaltet und bildet einen Teil des Abschlußwiderstandes der das Modulationssignal (Uₘ)zuführenden Anschlußleitung.

## Beschreibung

Die Erfindung betrifft eine Schaltungsanordnung für einen optischen Modulator gemäß dem Oberbegriff des Patentanspruchs 1.

Sogenannte externe optische Modulatoren, die meist unmittelbar hinter einer Lichtquelle, z.B. einem Laser, in einen optischen Wellenleiter eingefügt werden, sind in der Lage, Licht mit noch weit höheren Frequenzen zu modulieren, als dies z.B. mit direktmodulierten Lasern möglich ist. Siehe hierzu z.B. Aufsatz von M. Goto et al in IEEE Photonics Technology Letters, Vol. 2, No. 12, December 1990, S. 896 bis 898.

Bei der elektrischen Ansteuerung dieser als Modulatordioden ausgebildeten Modulatoren mit hochfrequenten elektrischen Signalen ist darauf zu achten, daß der von der Signalquelle an die Elektroden der Modulatordiode geführte Ansteuerstromkreis mit seinem Wellenwiderstand abgeschlossen ist. Letzteres wird dadurch erreicht, daß der Modulatordiode ein Nebenschlußwiderstand parallelgeschaltet wird.

Dennoch kommt es, insbesondere bei Frequenzen > 10 GHz zu Reflexionen von Hochfrequenzsignalen. Dies ist auf die parasitäre Kapazität der Diode im Zusammenwirken mit induktiven Widerständen in der Beschaltung der Diode zurückzuführen.

Der Erfindung liegt die Aufgabe zugrunde, derartige Reflexionen möglichst zum Verschwinden zu bringen und damit eine Erhöhung der Modulationsfrequenz und eine Verbesserung des jeweiligen optischen Übertragungskanals hinsichtlich seiner Übertragungskapazität zu ermöglichen.

Diese Aufgabe wird durch die Merkmale des Patentanspruchs 1 gelöst. Durch die zusätzliche Anordnung eines Dämpfungswiderstandes in Reihe mit der Modulatordiode werden Reflexionen gedämpft, ohne daß die elektrische Anpassung an die Zuleitung dadurch wesentlich gestört wird. Wird der Dämpfungswiderstand in Reihe mit einer Parallelschaltung von Diode und Nebenschlußwiderstand angeordnet, so können, gemäß einer im Patentanspruch 2 wiedergegebenen Ausgestaltung der Erfindung Dämpfungswiderstand und Nebenschlußwiderstand so bemessen werden, daß die Summe ihrer Werte gerade einen optimalen Abschlußwiderstand für den das Modulatorsignal liefernden Stromkreis ergibt.

Anspruch 3 sieht zusätzlich in Reihe mit der Modulatordiode eine Induktivität und eine Koppelkapazität vor, die, zwischen Modulatordiode und Masse angeordnet, eine Filterfunktion ausüben.

Ein gemäß Anspruch 4 vorgesehener Vorspannungsanschluß zwischen Diode und Koppelkapazität erlaubt, den nach Masse hin orientierten Anschluß der Diode auf vorgegebenem Potential zu halten.

Anspruch 5 sieht die Aufteilung der Reihenschaltung von Induktivität und Koppelkapazität in zwei zueinander parallelgeschaltete LC-Glieder vor, was einen weitgehend symmetrischen Schaltungsaufbau erlaubt.

Gemäß Anspruch 6 können die Teilinduktivitäten der LC-Glieder durch in Länge und Durchmesser entsprechend bemessene Bonddrähte gebildet werden.

Die Ansprüche 7 bis 10 betreffen den Aufbau der Schaltungsanordnung nach der Erfindung auf einem Substrat.

Anspruch 11 sieht die Verwendung der Schaltungsanordnung nach der Erfindung als optischer Schalter vor.

Anhand von 3 Figuren soll nun ein Ausführungsbeispiel der Schaltungsanordnung nach der Erfindung eingehend beschrieben werden.
- Fig. 1: zeigt eine Schaltung nach dem Stand der Technik,
- Fig. 2: zeigt ein elektrisches Schaltbild nach der Erfindung,
- Fig. 3: zeigt den elektrisch-mechanischen Aufbau der Schaltungsanordnung nach der Erfindung auf einem Substrat.

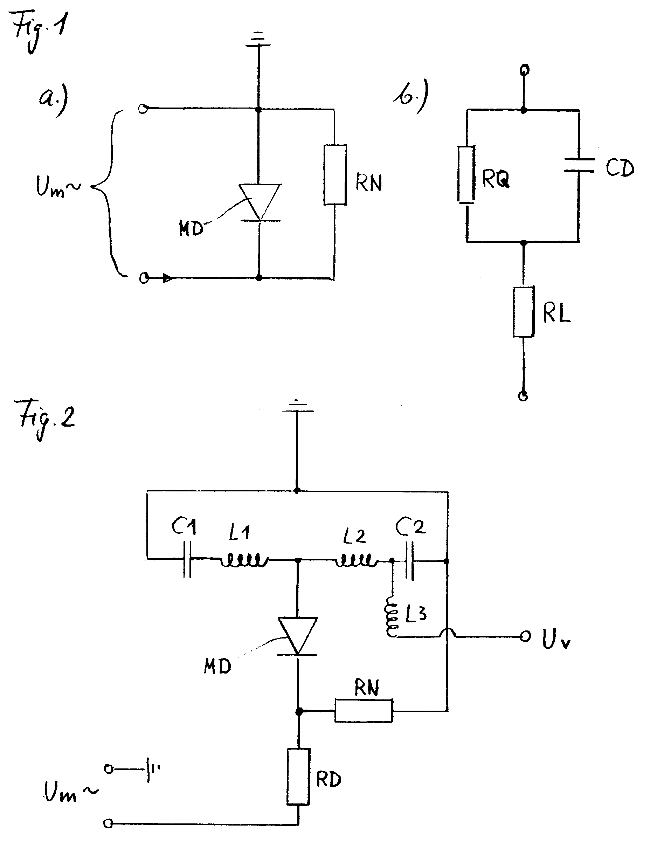

Fig. 1a zeigt eine Modulatordiode MD mit einem Nebenschlußwiderstand RN, der einen eine hochfrequente Signalspannung Uₘ liefernden Ansteuerstromkreis mit seinem Wellenwiderstand abschließt. In der Regel liegt eine Seite des Ansteuerstromkreises und damit eine Elektrode der Modulatordiode an Masse.

In Fig. 1b ist ein Ersatzschaltbild der Modulatordiode für den Betrieb in Sperrichtung wiedergegeben. Es enthält einen Diodensperrswiderstand RQ, eine Diodenkapazität CD und einen Längswiderstand RL. Der Diodensperrwiderstand liegt in der Größenordnung von 1 MΩ, die Diodenkapazität beträgt etwa 0,1 bis 0,4 pF und der Längswiderstand, der der Diodenkapazität vorgeschaltet ist und sich somit auch auf hochfrequente Wechselströme auswirkt, hat einen Wert zwischen 1 Ω und 10 Ω.

In Fig. 2 ist die Modulatordiode MD zusätzlich beschaltet. Außer einem Nebenschlußwiderstand RN gibt es einen Dämpfungswiderstand RD, der hier der Parallelschaltung von Modulatordiode MD und Nebenschlußwiderstand RN vorgeschaltet ist, aber auch unmittelbar der Modulatordiode vorgeschaltet sein kann, und es gibt, zwischen Modulatordiode und Masse geschaltet, zwei LC-Glieder, die jeweils aus einer Induktivität L1, L2 und einem Koppelkondensator C1, C2, bestehen. Anstelle zweier LC-Glieder könnte auch nur eines mit entsprechend niedrigerer Induktivität und höherer Kapazität treten, jedoch erlaubt eine Aufteilung in zwei Teilschaltungen hier eine symmetrische Anordnung der Bauelemente auf einem Substrat, wie in Fig. 2 dargestellt. Über eine dritte Induktivität L3 kann eine Vorspannung Uᵥ an die Koppelkondensatoren und die mit ihnen verbundene Elektrode der Modulatordiode gelegt werden.

Der Dämpfungswiderstand RD dämpft hier reflektierte Hochfrequenzschwingungen und bildet außerdem einen Teil des Abschlußwiderstandes des Ansteuerstromkreises. Der Wert des Abschlußwiderstandes setzt sich aus den Werten des Dämpfungswiderstandes RD und des Nebenschlußwiderstandes RN zusammen.

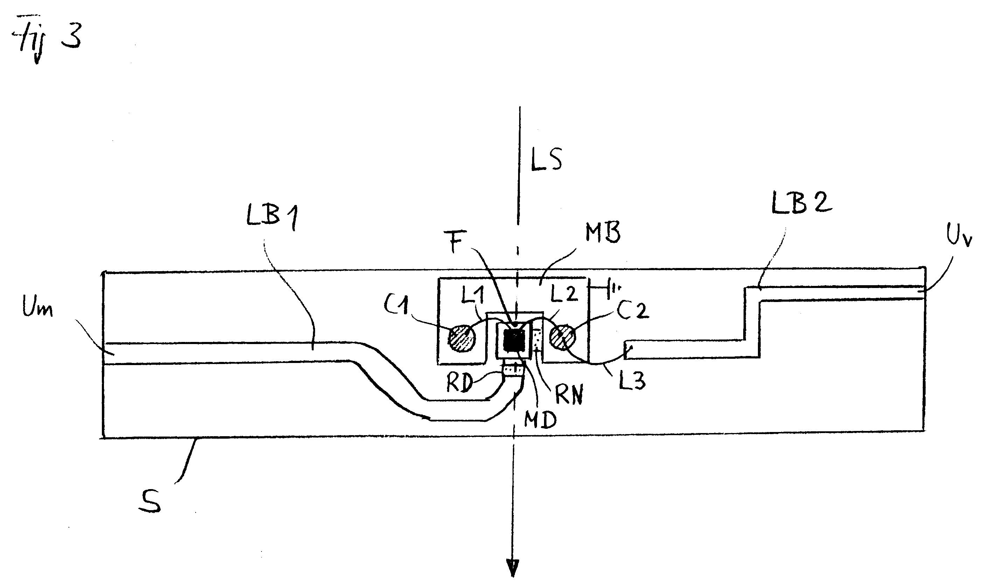

In Fig. 3 ist der Aufbau der Modulatorschaltung nach der Erfindung wiedergegeben. Auf einem Substrat S, das z.B. aus AlN bestehen kann, befindet sich ein metallisierter Bereich MB, der mit der ebenfalls metallisierten Rückseite des Substrates über nicht dargestellte elektrische Durchverbindungen verbunden und an Masse angeschlossen ist. Der metallisierte Bereich umschließt hufeisenförmig eine optische Modulatordiode MD, die z.B. mit ihrer Unterseite auf einer separaten Metallfläche F aufgelötet ist und von einem zu modulierenden Laserstrahl LS durchsetzt wird.

Die Unterseite der Modulatordiode, die hier gleichzeitig deren kathodenseitiger Anschluß ist, ist über z.B. in Dünnschichttechnik hergestellte Widerstände RD und RN mit einer Leiterbahn LB1 und mit dem metallisierten Bereich MB verbunden. Der Widerstand RD ist dabei, wie in Fig. 2, der Dämpfungswiderstand, der Widerstand RN der Nebenschlußwiderstand. Über die Leiterbahn LB1 wird hier die Modulationsspannung Uₘ zugeführt. Die Dicke des Substrats und die Breite dieser Leiterbahn sind so aufeinander abgestimmt, daß sich der gewünschte komplexe Leitungswiderstand zwischen Leiterbahn und metallisierter Rückseite des Substrats im Arbeitsfrequenzbereich einstellt.

Die in Fig. 3 von oben her zugängliche Anode der Modulatordiode ist über Bonddrähte mit Koppelkondensatoren C1 und C2 verbunden. Die Bonddrähte sind auf der Oberseite der Koppelkondensatoren befestigt und bilden Induktivitäten L1 und L2, die zusammen mit dem jeweils zugeordneten Koppelkondensator LC-Glieder bilden, welche zur Separation von Gleich- und Wechselspannungsanteil dienen.

Die Unterseite der Koppelkondensatoren, die den jeweiligen Gegenanschluß der Kondensatoren bilden, sind z.B. mit leitfähigem Klebstoff beiderseits der Modulatordiode, auf dem metallisierten Bereich MB befestigt und somit auch mit Masse verbunden.

Der Anschluß der Vorspannung Uᵥ erfolgt über eine zweite Leiterbahn LB2 und eine Bonddrahtverbindung zur Oberseite eines der Koppelkondensatoren C2. Auch dieser Bonddraht bildet eine Induktivität. Diese bewirkt eine Entkopplung der zweiten Leiterbahn und der Vorspannungsquelle von den mit dem hochfrequenten Modulationssignal beaufschlagten Schaltungsteilen.

## Patentansprüche

1. Schaltungsanordnung für einen optischen Modulator, mit einer in Sperrichtung betriebenen optischen Modulatordiode (MD), die von zu modulierendem Licht durchsetzt wird und der zur Impedanzanpassung an einen das Modulationssignal (Uₘ) liefernden Stromkreis ein Nebenschlußwiderstand (RN) parallel geschaltet ist,
**dadurch gekennzeichnet,** daß der optischen Modulatordiode (MD) und/oder der Parallelschaltung von optischer Modulatordiode und Nebenschlußwiderstand (RN) ein Dämpfungswiderstand (RD) vorgeschaltet ist.

2. Schaltungsanordnung nach Anspruch 1, mit einem der Parallelschaltung von optischer Modulatordiode (MD) und Nebenschlußwiderstand (RN) vorgeschalteten Dämpfungswiderstand (RD), dadurch gekennzeichnet, daß die Werte des Dämpfungswiderstandes und des Nebenschlußwiderstandes so gewählt sind, daß deren Summe einen optimalen Wert eines Abschlußwiderstandes für den das Modulationssignal (Uₘ) liefernden Stromkreis bildet.

3. Schaltungsanordnung nach Anspruch 1 oder 2, dadurch gekennzeichnet, daß in Reihe mit der Modulatordiode (MD) zusätzlich eine Induktivität und eine Koppelkapazität geschaltet sind und ein gegen Masse geschaltetes LC-Glied bilden.

4. Schaltungsanordnung nach Anspruch 3, dadurch gekennzeichnet, daß zwischen Modulatordiode und Koppelkapazität ein Anschluß für die Zuführung einer Vorspannung (Uᵥ) vorgesehen ist.

5. Schaltungsanordnung nach Anspruch 3 oder 4, dadurch gekennzeichnet, daß Induktivität und Koppelkapazität in je zwei zueinander parallele Teilbauelemente (L1, L2; C1, C2) aufgeteilt und zu zwei parallelen LC-Gliedern (L1, C1; L2, C2) zusammengeschaltet sind, die räumlich symmetrisch zur Modulatordiode (MD) angeordnet sind.

6. Schaltungsanordnung nach Anspruch 5, dadurch gekennzeichnet, daß die Induktivitäten (L1, L2) durch Bonddrähte gebildet werden.

7. Schaltungsanordnung nach einem der vorstehenden Ansprüche, dadurch gekennzeichnet, daß die Modulatordiode auf der Oberseite eines Substrates (S) in einer Aussparung eines metallisierten Bereichs (MB) angeordnet ist, daß die Unterseite des Substrates ganzflächig metallisiert und, wie der auf der Oberseite des Substrates angeordnete, metallisierte Bereich, elektrisch mit Masse verbunden ist und daß die elektrische Zuleitung zur Modulatordiode als metallische Leiterbahn (LB1) ausgebildet ist, die auf der Substratoberfläche verläuft und zusammen mit der Metallfläche der Substratunterseite eine 50Ω-Leitung bildet.

8. Schaltungsanordnung nach Anspruch 7, dadurch gekennzeichnet, daß Nebenschlußwiderstand (RN) und Dämpfungswiderstand (RD) in Dünnschichttechnik ausgebildet sind und eine die Modulatordiode tragende und mit deren Anode elektrisch verbundene metallisierte Fläche (F) mit dem metallisierten Bereich (MB) bzw. mit der Leiterbahn (LB1) verbinden.

9. Schaltungsanordnung nach Anspruch 8, dadurch gekennzeichnet, daß die Koppelkapazitäten (C1, C2) durch Koppelkondensatoren gebildet werden, die mittels elektrisch leitfähigem Klebstoff zu beiden Seiten der Modulatordiode auf der Oberfläche des metallisierten Bereichs (MB) befestigt sind, und daß der metallisierte Bereich an den Stellen, an denen sich die Koppelkondensatoren befinden, über Durchverbindungen mit der Unterseite des Substrates elektrisch verbunden ist.

10. Schaltungsanordnung nach einem der Ansprüche 7 bis 9, dadurch gekennzeichnet, daß das Substrat (S) aus Aluminiumnitrid und die metallisierten Flächen und Leiterbahnen aus Gold bestehen.

11. Verwendung der Schaltungsanordnung nach einem der vorstehenden Ansprüche als optischer Schalter.
